Europäisches Patentamt

European Patent Office

Office européen des brevets

(11) Numéro de publication: **0 388 284**

**A1**

(12) **DEMANDE DE BREVET EUROPEEN**

(21) Numéro de dépôt: 90400668.1

(22) Date de dépôt: 13.03.90

(51) Int. Cl.5: **F23J 15/00, F23G 5/46, F22B 37/00, B01D 53/34**

(30) Priorité: 14.03.89 FR 8903343

(43) Date de publication de la demande:
19.09.90 Bulletin 90/38

(84) Etats contractants désignés:
AT BE CH DE DK GB IT LI LU NL

(71) Demandeur: **INSTITUT FRANCAIS DU PETROLE**
**4, Avenue de Bois-Préau**
**F-92502 Rueil-Malmaison(FR)**

(72) Inventeur: **Martin, Gérard**
**34bis, avenue de Colmar**
**F-92500 Rueil Malmaison(FR)**
Inventeur: **Feugier, Alain**
**3, Ruelle du Moulle, Morainvilliers**
**F-78630 Orgeval(FR)**

(54) **Procédé et dispositif pour brûler des combustibles riches en produits chlorés et/ou en métaux lourds.**

(57) Le procédé comporte une étape de combustion dans une chambre de combustion (1) suivie de deux étapes de récupération de chaleur (9, 28). Entre lesdites deux étapes de récupération de chaleur se trouve une étape de traitement des effluents gazeux résultant de l'étape de combustion par un matériau absorbant de produits chlorés et/ou de métaux lourds, ladite étape de traitement se faisant par lit circulant (18, 23, 24) ou entraîné.

FIG.2

L'invention a pour objet un générateur thermique susceptible de brûler des combustibles riches en produits chlorés et en métaux lourds. Ce générateur se présente sous la forme d'un ensemble compact comportant un lit entraîné d'un matériau absorbant, disposé entre deux zones de récupération de chaleur. Il est particulièrement adapté a l'incinération d'ordures ménagères, de dérivés de ces ordures ou de déchets industriels.

Dans la plupart des pays industrialisés, des réglementations récentes limitent les émissions d'acide chlorhydrique et de métaux lourds par les effluents des unités d'incinération. A terme, la grande majorité de ces unités devront être équipées de dispositifs de traitement des fumées.

Les procédés actuellement disponibles se classent en trois catégories :
- procédés en voie sèche (injection de chaux pulvérulente),
- procédés en voie semi-sèche (injections séparées d'eau et de chaux), ou semi-humide (injection de lait de chaux) et
- procédés en voie humide (lavage par une solution alcaline).

·      Tous ces procédés sont appliqués en aval de la récupération de chaleur.

Les procédés par voie sèche ou semi-sèche sont intéressants car les rejets se trouvent sous forme solide et sont facilement manipulables. Par contre, ils ont comme inconvénient majeur une consommation d'absorbant 2,5 à 5 fois plus importante que ce que requiert la stoechiométrie de la réaction de déchloration. Avec les procédés par voie humide, les consommations d'absorbant sont plus modestes, mais les moyens à mettre en oeuvre sont complexes et coûteux. Il faut en particulier des moyens de traitement des eaux de lavage, ainsi que des réchauffeurs de fumées.

Le générateur proposé dans la présente demande permet de s'affranchir des inconvénients précités. Il comporte un lit entraîné d'un absorbant généralement à base de chaux, placé entre deux zones de récupération de chaleur. Ce lit comporte une chambre, de préférence verticale, à la base de laquelle sont introduits les fumées à traiter, un ou des séparateurs gaz-solides placés en sortie haute de la chambre, et éventuellement des moyens de recyclage dans la chambre, des solides captés au niveau des séparateurs gaz-solides.

Le lit peut être un lit circulant ou un lit entraîné sans circulation des particules absorbantes.

Ainsi, la présente invention concerne un procédé pour brûler dans un générateur thermique des combustibles riches en produits chlorés et/ou en métaux lourds, ledit procédé comportant une étape de combustion suivie de deux étapes de récupération de chaleur. Le procédé selon l'invention comporte en outre, entre lesdites deux étapes de récupération de chaleur, une étape de traitement des effluents gazeux résultant de l'étape de combustion par un matériau absorbant de produits chlorés et/ou de métaux lourds, ladite étape de traitement se faisant par lit entraîné.

L'étape de traitement peut se faire par un lit circulant.

On pourra récupérer en amont dudit lit entraîné entre 70 et 95 % de la quantité de chaleur totale récupérée dans le générateur thermique et de préférence entre 80 et 90 %.

La température du lit entraîné pourra être comprise entre 250°C et 450°C et de préférence entre 300°C et 350°C.

Le lit entraîné pourra opérer avec des vitesses de gaz comprises entre 4 et 10 m/s.

De même, le lit entraîné pourra opérer avec des grains de matériaux absorbant ayant une taille comprise entre 1 et 2.000 microns et de préférence entre 100 et 300 microns dans le cas d'un lit circulant ou entre 1 et 100 microns dans le cas d'un lit entraîné sans recirculation des grains.

Le lit entraîné pourra être un lit circulant, pour lequel l'importance de la phase dense est telle qu'en l'absence de fluidisation on aurait un lit fixe dont la hauteur serait comprise entre 5 et 150 cm et de préférence entre 30 et 50cm.

La présente invention concerne également un générateur thermique brûlant des combustibles riches en produits chlorés et/ou en métaux lourds, comportant un foyer, des premiers et deuxièmes moyens de prélèvement de chaleur et un lit entraîné, lesdits éléments étant agencés pour que les fumées provenant du foyer pénètrent d'abord dans les premiers moyens de prélèvement de chaleur puis dans le lit entraîné, puis dans les deuxièmes moyens de récupération de chaleur.

Le lit du générateur thermique pourra être un lit circulant.

Ce lit circulant pourra comporter un distributeur pour introduire une partie des fumées dans le réacteur du lit circulant, et des ouvertures latérales situées dans les parois dudit réacteur au voisinage dudit distributeur pour l'introduction d'une autre partie des fumées.

Les premiers moyens de prélèvement de chaleur pourront comporter deux circuits d'acheminement des gaz dont chacun a des aptitudes d'échange thermique différentes et des moyens de réglage de la répartition des fumées entre lesdits deux circuits.

Le foyer et les premiers moyens de prélèvement de chaleur, et/ou les premiers moyens de prélèvement de chaleur et ledit lit circulant, et/ou le lit circulant et les deuxièmes moyens de prélèvement de chaleur, pourront avoir une parois commune.

Le lit entraîné pourra être un lit sensiblement adiabatique, c'est-à-dire avec de faibles échanges thermiques..

La présente invention concerne aussi l'application du procédé ou du générateur thermique à l'incinération d'ordures ménagères, de déchets industriels, ou de dérivés de ces produits.

La présente invention sera mieux comprise et ses avantages apparaitront plus clairement à la description qui suit d'exemples particuliers, nullement limitatifs, illustrée par les figures annexées parmi lesquelles :

- la figure 1 montre la courbe de rendement de déchloration en fonction de la température du lit circulant,

- la figure 2 représente le schéma général d'un générateur à lit circulant,

- la figure 3 montre l'équivalent de la courbe de la figure 1, mais pour un lit entraîné sans recirculation des particules, et

- la figure 4 représente le schéma général d'un générateur à lit entraîné sans recirculation de particules.

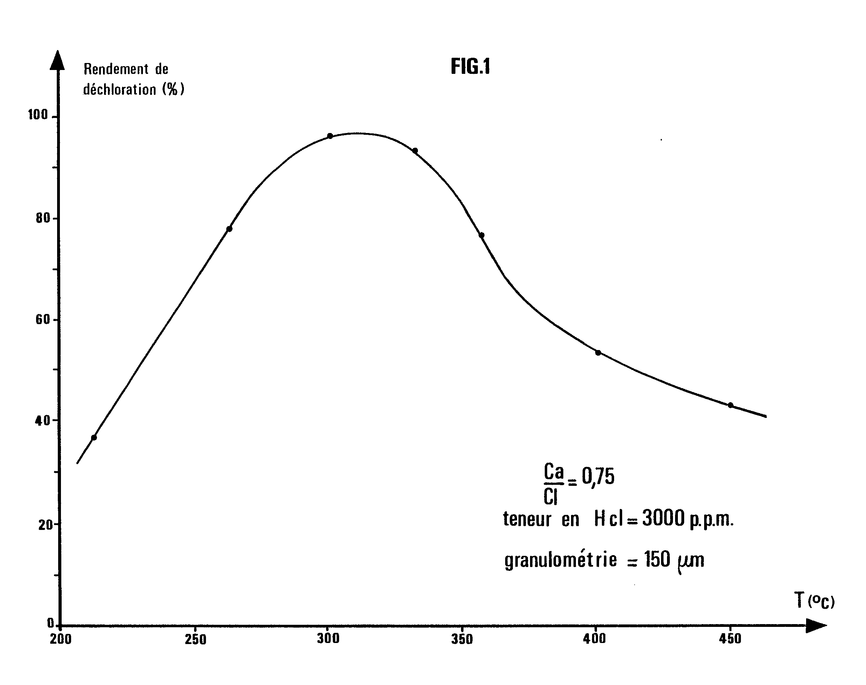

La figure 1 illustre les résultats d'expérience et montre que l'intervalle de température pour réaliser la déchloration des effluents est compris entre 250°C et 450°C, et de préférence entre 300°C et 350°C.

Elle concerne un lit circulant comportant des particules ayant une granulométrie de 150 microns, un rapport molaire Ca/Cl dans les débits de fumée et d'absorbant entrant de 0,75, une tenue en Hcl de 1.000 ppm.

Ainsi, selon la présente invention et dans le cas d'un lit entraîné, celui-ci opère avec des vitesses de gaz comprises entre 4 et 15 m/s, de préférence entre 5 et 8 m/s avec des grains dont la taille est comprise entre 1 et 2.000 microns, de préférence entre 100 et 300 microns pour un lit circulant et entre 1 et 100 microns pour un lit entraîné sans recirculation. La vitesse des gaz dans la chambre est ajustée en fonction de la granulométrie de l'absorbant, afin que les pertes au(x) cyclone(s) dans le cas d'un lit circulant ne soient pas trop importantes, et en tout cas, qu'elles n'entraînent pas une diminution rédhibitoire de l'inventaire en solides de l'installation.

La présente description se poursuit en considérant le cas du lit circulant.

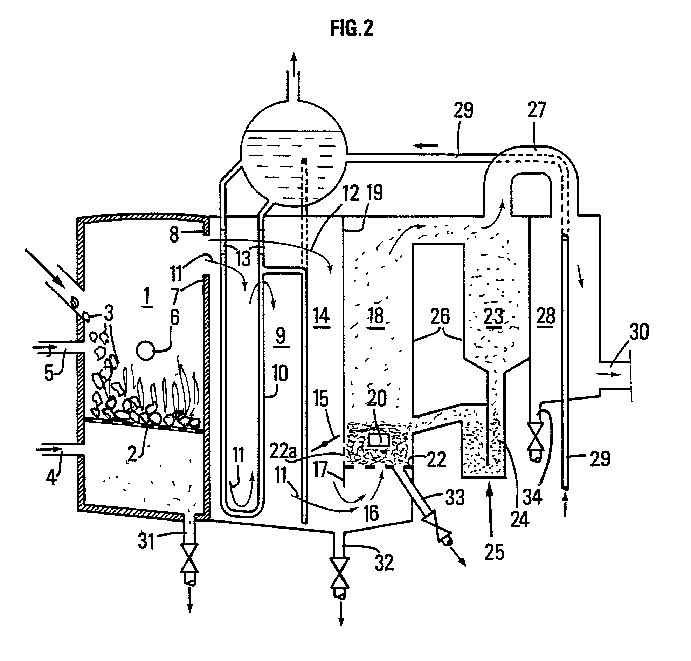

Pour maintenir l'inventaire et pour mieux contrôler le débit de solides en circulation, l'introduction des fumées dans la partie basse du réacteur peut être étagée. Une première partie des fumées est introduite par le distributeur 22 (Fig. 2) et une seconde partie pénétre dans la chambre par des ouvertures 22a latérales, ou par des cannes d'injection. Ce mode d'introduction des fumées permet d'avoir une phase "dense" dans la partie basse de la chambre. Cette phase dense assure une bonne captation des métaux lourds (cadmium, zinc, plomb etc...). L'importance de la phase dense est telle qu'en absence de fluidisation, on aurait un lit fixe dont la hauteur serait comprise entre 5 et 150 cm et de préférence entre 30 et 50 cm. La température de fonctionnement du lit circulant est réglée en fonction de la nature de l'absorbant et de l'allure de marche du générateur. Elle peut être ajustée grâce à un cloisonnement de la chaudière qui permet d'obtenir un courant de gaz chauds et un courant de gaz froids, l'un des deux courants étant réglé par des moyens de vannage. Elle pourrait aussi être ajustée par un recyclage de gaz refroidis prélevés après le dernier élément de récupération de chaleur. L'ensemble du lit circulant est revêtu de matériaux isolants, afin qu'il fonctionne de façon quasi adiabatique.

L'intervalle de température bien adapté et les longs temps de séjour des grains dans le lit circulant permettent de limiter les consommations d'absorbant à moins de deux fois la stoechiométrie et de préférence à moins de 1,5 fois la stoechiométrie, tout en ayant des rendements de déchloration et de captation des métaux compris entre 85 et 99 %, suivant la nature de l'absorbant et le rapport molaire Ca/Cl.

Un autre avantage de ce générateur est qu'il admet des distributions granulométriques étendues, ce qui permet de réduire le coût de préparation de l'absorbant.

Le fait de réaliser la déchloration (et accessoirement la désulfuration lorsqu' il y a des oxydes de soufre dans les effluents) avant la récupération finale d'énergie, permet d'accroître le rendement de cette récupération, puisque le point de rosée acide des fumées a été abaissé.

Les absorbants utilisés sont de préférence des chaux éteintes Ca(OH)2. Il est également possible d'utiliser de la chaux vive, moyennant généralement une injection d'eau complémentaire.

Les liaisons entre les différents éléments du générateur sont conçus de telle sorte que l'ensemble se présente sous une forme compacte et peu encombrante. Le foyer et la chaudière de récupération, ainsi que l'enceinte de déchloration du lit circulant ont une paroi commune avec la chaudière de récupération de chaleur. Chacune de ces parois possède au moins un orifice de passage des gaz, d'une part, pour le transfert entre foyer et chaudière et, d'autre part, entre chaudière et lit circulant. Le lit circulant de déchloration et de rétention des métaux lourds, dont le matériau solide circulant est essentiellement constitué par l'absorbant, a pour fluide moteur les gaz chauds issus de la chaudière.

Le principe du générateur thermique auto-déchlorant compact à lit circulant selon l'invention est illustré par la figure 2.

La chambre de combustion 1 ou foyer est préférentiellement à "parois chaudes", tout au moins dans sa plus grande partie, ceci pour maintenir un niveau de température apte à favoriser la combustion complète de déchets à bas pouvoir calorifique.

La combustion s'effectue, dans l'exemple choisi, sur une grille 2 où sont déversés en 3 les déchets combustibles. L'air comburant est partagé entre air primaire AP et air secondaire AS, distribués de part et d'autre de la grille par les orifices 4 et 5. Un brûleur d'allumage, ou de soutien 6, complète l'équipement de combustion.

Les parois 7 de l'incinérateur sont constituées d'un matériau réfractaire isolant. Ces parois sont dimensionnées de telle sorte que la température des gaz de combustion soit au moins égale à 750°C, quelle que soit l'allure de marche du générateur.

En partie haute du foyer est ménagé un passage 8 permettant le transfert des gaz brûlés vers la chaudière.

La chaudière 9 comporte un ensemble de faisceaux tubulaires 10 destinés à produire de la vapeur où à chauffer tout autre fluide caloporteur. Les gaz issus du foyer 1 se partagent suivant deux flux 11 et 12. Le flux 11 intéresse l'intégralité des surfaces d'échange. Le flux 12 permet à une partie des gaz de passer directement, via les ouvertures 13 ménagées dans les nappes de tubes, dans la partie arrière 14, en n'ayant rencontré qu'une très faible partie des surfaces d'échange.

La répartition entre les flux gazeux 11 et 12 s'ajuste en agissant sur un dispositif d'obstruction réglable 15. On peut ainsi régler par mélange d'un courant "froid" et d'un courant "chaud" la température du débit gazeux 16 pénètrant dans le lit circulant par sa partie basse 17. Cette température sera avantageusement maintenue aux alentours de 300°C, dans le cas d'emploi de chaux sous un rapport molaire Ca/Cl de l'ordre de 0,7.

Le lit circulant de déchloration a une paroi commune 19 avec la chaudière, la communication entre ces deux éléments s'effectuant directement par un ou des passages aménagés dans la partie inférieure 17 de cette paroi.

Dans l'exemple de la figure 2, le matériau absorbant du chlore est injecté par au moins un orifice 20 dans la partie basse du réacteur 18, qui constitue la phase dense du lit circulant. Cette phase dense est particulièrement efficace pour la rétention des métaux lourds présents dans les fumées 16.

Les gaz chargés en acide chlorhydrique 16 pénètrent dans la phase dense par l'intermédiaire d'une grille perforée 22 ou de tout autre dispositif pouvant assurer une bonne répartition des gaz dans la masse de solides fluidisée.

Outre l'absorbant, cette masse peut comporter des matériaux solides inertes dont l'ajout ou le retrait dans la boucle de circulation permet de mieux maîtriser le contact gaz-solides, et d'agir sur le débit des solides entraînés hors de la zone dense pour être recyclés. Ce recyclage s'effectue par l'intermédiaire du séparateur de particules 23 qui peut être un cyclone relié au réacteur 18 par la jambe de liaison 24. Le débit de recirculation est réglé par un dispositif de vannage 25 qui peut être de conception mécanique ou hydraulique, par exemple un siphon fluidisé ou une "vanne en L".

L'ensemble réacteur 18, cyclone 23 et jambe de liaison 24, qui constitue le lit circulant de déchloration, est protégé thermiquement par un matériau isolant 26.

Les gaz déchlorés 27 quittent la partie supérieure du séparateur 23 pour alimenter un échangeur 28 qui peut constituer l'économiseur du générateur de vapeur. Les surfaces d'échange 29 peuvent être constituées de faisceaux tubulaires.

Les fumées sont finalement évacuées par le conduit 30, et dirigées vers le système de filtration, non représenté sur le schéma.

Le soutirage des déchets solides non recyclés, ou ayant échappé au séparateur 23 du lit circulant, peut être effectué par les orifices 31, 32, 33 et 34.

Une grande partie des métaux lourds se retrouve dans les solides évacués de la phase dense du lit circulant par l'orifice 33. Un traitement éventuel par voie chimique peut les transformer en composés pratiquement insolubles.

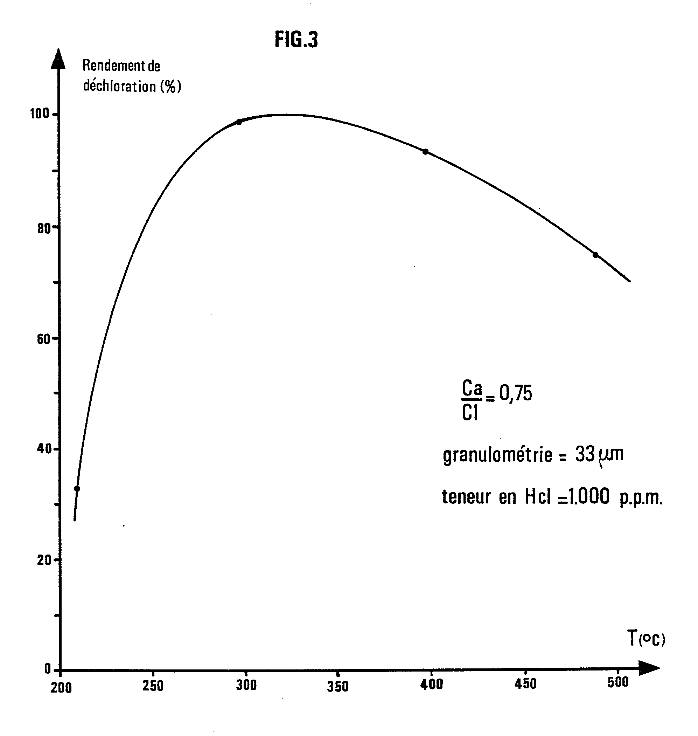

La figure 3 représente la courbe de rendement de déchloration dans des conditions similaires à celles de la figure 1, mais avec des particules ayant une granulométrie de 33 micro mètres, ce qui correspond au cas d'un lit entraîné, sans recirculation des particules absorbantes.

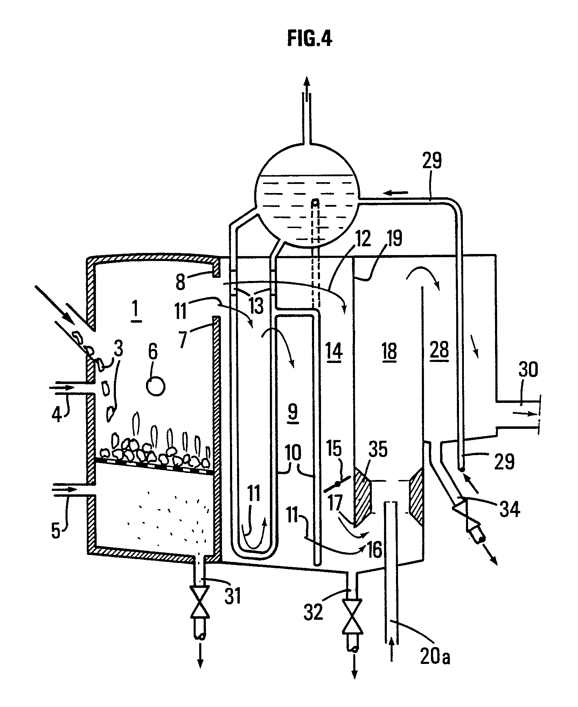

La figure 4 représente schématiquement un générateur thermique auto-déchlorant compact à lit entraîné, sans recirculation des particules.

Les parties communes entre les figures 2 et 4 ont conservé les mêmes références.

Dans le cas de la figure 4, il n'est plus nécessaire d'avoir un distributeur et l'injection des particules absorbantes se fait par un injecteur 20a placé dans un rétrécissement 35.

Les gaz provenant de la chaudière 9 pénètrent directement dans le réacteur 18a du lit entraîné sans recirculation des particules.

L'ensemble gaz et particule pénètre dans l'échangeur 28 par l'orifice 36.

## Revendications

1. - Procédé pour brûler dans un générateur thermique des combustibles riches en produits chlorés et/ou en métaux lourds, ce procédé comportant une étape de combustion suivie de deux étapes de récupération de chaleur, caractérisé en ce qu'il comporte entre lesdites deux étapes de récupération de chaleur une étape de traitement des effluents gazeux résultant de l'étape de combustion par un matériau absorbant de produits chlorés et/ou de métaux lourds, ladite étape de traitement se faisant par lit circulant.

2. - Procédé selon la revendications 1, caractérisé en ce que l'on récupère en amont du lit entraîné entre 70 et 95 %, et de préférence entre 80 et 90 %, de la quantité de chaleur totale récupérée dans le générateur thermique.

3. - Procédé selon l'une des revendications précédentes, caractérisé en ce que la température dudit lit entraîné est comprise entre 250°C et 450°C et de préférence entre 300°C et 350°C.

4. - Procédé selon l'une des revendications précédentes, caractérisé en ce que le lit entraîné opère avec des vitesses de gaz comprise entre 4 et 15 m/s.

5. - Procédé selon l'une des revendications précédentes, caractérisé en ce que ledit lit entraîné opère avec des grains de matériaux absorbant ayant une taille comprise entre 1 et 2.000 microns et de préférence entre 100 et 300 microns dans le cas d'un lit circulant ou entre 1 et 100 microns dans le cas d'un lit entraîné sans recirculation des grains.

6. - Procédé selon l'une des revendications précédentes dans lequel le lit entraîné est un lit circulant, caractérisé en ce que l'importance de la phase dense est telle qu'en l'absence de fluidisation, on aurait un lit fixe dont la hauteur serait comprise entre 5 et 150 cm et de préférence entre 30 et 50cm.

7. - Générateur thermique brûlant des combustibles riches en produits chlorés comportant un foyer, des premiers et deuxièmes moyens de prélèvement de chaleur et un lit circulant, lesdits éléments étant agencés pour que les fumées provenant du foyer pénètrent d'abord dans les premiers moyens de prélèvement de chaleur, puis dans le lit entraîné, puis dans les deuxièmes moyens de récupération de chaleur.

8. - Générateur thermique selon la revendication 7, caractérisé en ce que ledit lit est un lit circulant.

9. - Générateur thermique selon la revendication 8, caractérisé en ce que ledit lit circulant comporte un distributeur pour introduire une partie des fumées dans le réacteur du lit circulant, et des ouvertures latérales situées dans les parois dudit réacteur au voisinage dudit distributeur par l'introduction d'une autre partie des fumées.

10. - Générateur thermique selon l'une des revendications 7 à 9, caractérisé en ce que les premiers moyens de prélèvement de chaleur comportent deux circuits d'acheminement des gaz ayant des aptitudes d'échange thermique différentes et des moyens de réglage de la répartition entre lesdits deux circuits.

11. - Générateur thermique selon l'une des revendications 7 et 8, caractérisé en ce que :
- ledit foyer et les premiers moyens de prélèvement de chaleur, et/ou
- lesdits premiers moyens de prélèvement de chaleur et ledit lit circulant, et/ou
- ledit lit circulant et lesdits deuxièmes moyens de prélèvement de chaleur,
ont une parois commune.

12. - Générateur thermique selon l'une des revendications 7 à 11, caractérisé en ce que ledit lit entraîné est un lit sensiblement adiabatique.

13. - Application du procédé ou du générateur thermique selon l'une des revendications précédentes à l'incinération d'ordures ménagères, de déchets industriels, ou de dérivés de ces produits.

**FIG.1**

Rendement de déchloration (%)

$\dfrac{Ca}{Cl} = 0{,}75$

teneur en Hcl = 3000 p.p.m.

granulométrie = 150 $\mu$m

T (°C)

EP 0 388 284 A1

**FIG.2**

# FIG.3

**FIG.4**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | FR-A-2 587 238 (SITECO)<br>* Page 1, lignes 1-20,30-36; page 2, lignes 8-31; page 5, lignes 1-30; page 7, lignes 30-38; page 8, lignes 6-10; figure 1 *<br>--- | 1,3,4,5 ,7,8,13 | F 23 J 15/00<br>F 23 G 5/46<br>F 22 B 37/00<br>B 01 D 53/34 |
| Y | FR-A-2 189 101 (RHONE-PROGIL)<br>* Page 1, lignes 1-8,32-37; page 2, lignes 16-37; page 3, lignes 4-20; figures 1,2 *<br>--- | 1,3,4,5 ,7,8,13 | |
| Y | DE-A-3 527 615 (KLÖCKNER-HUMBOLDT-DEUTZ)<br>* Colonne 7, lignes 15-21,44-51; colonne 12, lignes 17-22,41-66; colonne 11, lignes 62-68; figure 2 *<br>--- | 1,7,8, 13 | |
| Y | EP-A-0 211 458 (METALLGESELLSCHAFT)<br>* Colonne 1, lignes 21-29; colonne 3, lignes 26-41; colonne 6, lignes 20-34 *<br>--- | 1,7,8, 13 | |
| A | DE-A-2 252 710 (VEREINIGTE KESSELWERKE)<br>* Page 4, lignes 1-12 *<br>--- | 3 | DOMAINES TECHNIQUES RECHERCHES (Int. Cl.5)<br><br>F 23 J<br>F 22 B<br>B 01 D |
| A | DE-A-2 839 516 (CEAG FILTER- UND ENTSTAUBUNGSTECHNIK)<br>* Page 1, revendicaton 1 *<br>--- | 4 | |
| A | FR-A-2 609 150 (INSTITUT FRANCAIS DU PETROLE)<br>* Page 4, paragraphes 6,7; figure unique *<br>--- -/- | 9,11 | |

Le présent rapport a été établi pour toutes les revendications

| Lieu de la recherche | Date d'achèvement de la recherche | Examinateur |
|---|---|---|
| LA HAYE | 22-06-1990 | PHOA Y.E. |

Office européen
des brevets

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | PATENT ABSTRACTS OF JAPAN, vol. 2, no. 54, 19 avril 1978, page 648 M 78; & JP-A-53 15 639 (HITACHI ZOSEN K.K.) 13-02-1978 | 10 | |
| A | FR-A-2 574 308 (INSTITUT FRANCAIS DU PETROLE) * Page 4, paragraphes 6,7; figure unique * | 12 | |
| A | EP-A-0 181 820 (AIR INDUSTRIE ENVIRONNEMENT) * Page 5, lignes 5-24; page 6, lignes 16-32; figure 1 * | 12 | |
| A | FR-A-2 168 151 (HEURTEY) | | |
| A | US-A-4 236 464 (ANDERSON) | | |
| A | EP-A-0 137 599 (SMIDTH) | | |
| A | FR-A-2 583 304 (BABCOCK) | | |

DOMAINES TECHNIQUES RECHERCHES (Int. Cl.5)

Le présent rapport a été établi pour toutes les revendications

| Lieu de la recherche | Date d'achèvement de la recherche | Examinateur |
|---|---|---|
| LA HAYE | 22-06-1990 | PHOA Y.E. |